# DEMANDE DE BREVET EUROPEEN

(11) **EP 1 306 275 A1**
(43) Date de publication de la demande: **02.05.2003**
(21) Numéro de dépôt: 01710054.6
(22) Date de dépôt: 27.10.2001
(51) Int. Cl.: B60R 22/12

(54) **Ceinture de sécurité pour sièges de véhicules**

(71) Demandeur: Badbadian, Georges, 32500 Fleurance (FR)
(72) Inventeur: Badbadian, Georges, 32500 Fleurance (FR)

(57) **Abrégé**

Ceinture de sécurité pour siège comprenant un premier point (2) d' attache immobile et fixé en partie inférieure de l'habitacle, un deuxième point (3) positionné en partie haute, par lequel se range ou se déroule ladite ceinture (4), pour venir se verrouiller, avec une boucle (8), sur un troisième point fixé au planché, caractérisée en ce que la ceinture proprement dite comporte sur une partie de sa longueur, un bandeau en tissu (10) dont la face visible, de l'extérieur du véhicule, est recouverte en partie d' un matériau rétroréfléchissant (5) et en partie d'un matériau fluorescent (7). Les matériaux sont rapportés sur la ceinture par coutures (11) ou par thermocollages .

## Description

L' invention concerne les ceintures de sécurité pour sièges de véhicules fonctionnant de manière analogue aux ceintures existant actuellement et comprenant un point fixe, un point de déroulement et un point d' attache .

Un inconvénient majeur des ceintures de sécurité actuelles réside en ce qu' elles sont difficilement perçues de l'extérieur des véhicules par les autorités affectés à la sécurité routière. En effet, les autorités routières ont, entre autre, pour mission de surveiller que le port obligatoire de la ceinture soit respecté. Cette vérification est rendue difficile notamment pour les raisons suivantes : les ceintures de sécurité sont toujours fabriquées avec des tissages aux couleurs sombres surtout grise ou noire et d' autre part les pare-brises et les vitres latérales des véhicules sont de plus en plus fréquemment teintés, ce qui assombrit l'intérieur de l' habitacle. En outre, les ceintures sont partiellement masquées par les bras et par le volant, en ce qui concerne le chauffeur. De nuit l' éclairage des véhicules tels que les codes ou les phares occultent la vissibilité et ne permettent pas ce type de contrôle par les autorités .

L'invention, objet des présentes, permet d' obvier à ces inconvénients, en ce que la ceinture de sécurité est visible de l'extérieur du véhicule, depuis le bas-côté de la chaussée , de jour visuellement, sans équipement particulier, et par temps sombre ou de nuit avec une simple lampe de poche à pile.

L'invention concerne une ceinture de sécurité pour siège de véhicule comprenant de manière connue , une ceinture proprement dite ayant un premier point d' attache immobile et fixé en partie inférieure de l' habitacle, côté porte , un deuxième point positionné en partie haute sur l' habitacle , et généralement à la verticalité du premier, par lequel deuxième point se range ou se déroule la dite ceinture pour être verrouillée, par le truchement d' une boucle, sur un troisième point placé de l' autre côté du passager, entre deux sièges, de façon à arrêter la projection du passager vers l' avant, caractérisée en ce que la ceinture proprement dite comporte sur une partie de sa longueur, un bandeau en tissu dont la face visible de l' extérieur est recouverte par fractions ou parties d' un matériau rétroréfléchissant, lequel tissu rétroréfléchissant est associé à un tissu recouvert par fractions ou parties d' un matériau fluorescent .

Le tissu fluorescent fonctionnant avec les UV du soleil est visible, de jour par temps clair ou mauvais temps, ainsi qu' à l' aube ou en fin de journée. Le tissage rétroréfléchissant renvoie la lumière à sa source, même dans le cas d' une source de lumière faible. Par temps sombre ou de nuit noire, le tissage rétroréfléchissant augmente également le contraste. Ainsi les fractions ou parties rétroréfléchissantes et les fractions fluorescentes coopèrent ensemble pour permettre la visibilité de la ceinture de jour comme de nuit dans l' habitacle d' un véhicule.

Ces fractions ou parties fluorescentes et rétroréfléchissantes sont réparties dans le sens de la longueur et de la largeur sur le bandeau de la ceinture proprement dite, et juxtaposées entre-elles de manière à être perçues sumultanément de l' extérieur du véhicule, sur un même axe transversal, à un quelconque niveau du torse ou de l'épaule de l' occupant du siège. Les fractions fluorescentes et rétroréfléchissantes, juxtaposées, sont réparties sur la ceinture sur une longueur avantageuse, à partir de l' arrêtoir, qui retient la boucle de verrouillage , jusqu' à un mètre, voire plus , de manière à se prolonger au-delà de I' épaule jusqu' au deuxième point haut d' enroulement . Les différentes parties fluorescentes et rétroréfléchissantes sont réparties et juxtaposées sur le tissu de façon variable , de manière à former une association harmonieuse .

Les bandeaux en tissus fluorescents et rétroréfléchissants sont rapportés sur la ceinture au moyen de multiples coutures . Le matériau rétroréfléchissant sur le tissu, est constitué d' une mince peau en résine synthétique réflectorisante qui porte des micro-éléments réfléchissants, pouvant être des microbilles ou posséder tout autre forme adéquate , pour réfléchir les rayons provenant d' une source quelconque et extérieure à l' habitacle du véhicule. Les micro-éléments sont partiellement enfoncés dans la mince peau et positionnés selon un rangement linéaire sur une même couche uniforme .

Selon une variante de réalisation, le bandeau en tissu a une largeur inférieure à la largeur de la ceinture proprement dite . En outre les tissus formant la base du bandeau sont constitués avec une fibre textile ou mixte ou synthétique.

Selon une variante de réalisation, sans se départir de l'invention, la base du bandeau est enduite d' une colle fusible à chaud, qui adhère à la sangle, lors de l' assemblage. Cette variante supprime les coutures transversales et longitudinales. L' ensemble sangle et bandeau passe dans une table chauffante et à pression variable dont la partie supérieure, formant couvercle, assure le plaquage du bandeau thermocollant sur la sangle. Pour réactiver la colle fusible du bandeau, la table porte cette dernière à une température oscillant entre 140 C° et 170C° , pendant une durée située entre 20 et 30 secondes .

Selon une autre variante de réalisation, sans se départir de l'invention, pour obtenir une ceinture de sécurité munie d' un bandeau plus étroit, un mince élément de transfert thermocollant, constitué d'un matériau rétroréfléchissant et en partie d'un matériau fluorescent, est couché directement par sa base, sur une face de la sangle visible de l'extérieur.
Comme pour la variante précédente, lors de l' assemblage, l' élément de transfert rétroréfléchissant et fluorescent est posé sur la longueur de la sangle et l' ensemble est introduit par tapis roulant en continu dans une table chauffante et à pression variable. Cette table assure le plaquage par pression de I' élément de transfert et produit la chaleur nécessaire variant de 140C° à 180 C° durant 10 à 20 secondes .La table chauffante réactive la colle fusible du mince élément de transfert thermocollant, provocant I' adhésion définitive dudit élément de transfert sur la face de la sangle. Le mince élément de transfert est positionné sur la sangle de la ceinture, au même endroit que le bandeau décrit ci-avant par rapport au pilote de la voiture.
Quel que soit le mode de fixation de l' ensemble fluorescent et rétroréfléchissant sur la sangle, par couture ou par thermocollage, la sangle de la ceinture de 5 à 8cm de large se présente sous forme de rouleaux préalablement marqués pour indiquer les emplacements de pose.
Le bandeau ou le mince élément de transfert , selon le cas, est déposé sur une face de la longueur de la sangle, par une alimentation manuelle à l' unité ou en continue , de manière automatique par rouleaux dévidoirs prédécoupés. L' ensemble sangle et bandeau ou élément de transfert ,est introduit par tapis roulant en continu, selon le cas, vers une machine à coudre,ou dans une table chauffante de pression variable, puis l' ensemble est repris par tapis roulant et est dirigé sur un enrouleur.

L'invention est exposée ci-après plus en détail à l' aide de dessins représentant seulement des modes d' exécution , à titre d' exemples non limitatifs.

La figure 1 représente partiellement, en vue de face , une ceinture de sécurité positionnée sur un siège de véhicule comportant un bandeau .
La figure 2 représente partiellement, en vue de face , une ceinture de sécurité pour siège de véhicule, avec une disposition particulière de la partie rétroréfléchissante et fluorescente.

La figure 3 représente partiellement, en vue de face, une ceinture de sécurité pour siège de véhicule, avec une autre disposition de la partie rétroréfléchissante et fluorescente .
La figure 4 représente partiellement, en vue de face, une ceinture de sécurité pour siège de véhicule, avec une autre disposition de la partie rétroréfléchissante et fluorescente .
La figure 5 représente plus complètement, à une autre échelle , la ceinture dessinée en figure 2 .
La figure 6 représente partiellement, en coupe transversale, les éléments composant une partie rétroréfléchissante d' une ceinture de sécurité pour siège.

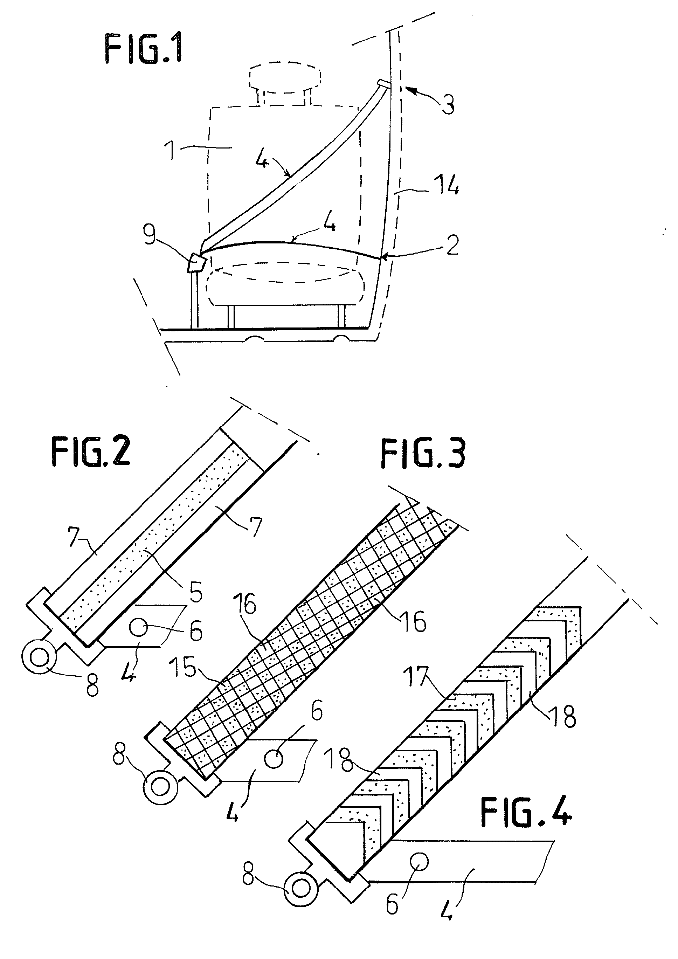

Les figures 1, 2 , 5 et 6 représentent une ceinture de sécurité , munie de l'invention objet des présentes, appliquée à titre d'exemple pour le siège du chauffeur dans la description qui suit. Selon une disposition connue, la ceinture du chauffeur comprend pour le siège 1du chauffeur, un point fixe 2 placé en partie inférieure de I' habitacle, côté portière, lequel point 2 est surmonté, à la verticalité, d' un deuxième point 3 de déroulement, d' enroulement et renferme un système de blocage de la ceinture 4 proprement dite, laquelle ceinture comporte une partie rétroréfléchissante 5 et des parties fluorescentes 7 sur une portion de sa longueur, à partir de I' arrêtoir 6. Cet arrêtoir 6 retient la boucle 8 en position de repos, laquelle boucle 8 se verrouille sur le troisième point 9 placé généralement entre les deux sièges avant du véhicule. Sur la face visible de la ceinture 4 proprement dite est rapporté un bandeau en tissu 10 longitudinal au moyen d' une couture périphérique et de coutures longitudinales 11 et de coutures transversales 11' suffisamment rapprochées, pour obtenir une bonne adhérence à la ceinture et éviter tout boursouflage du tissu.

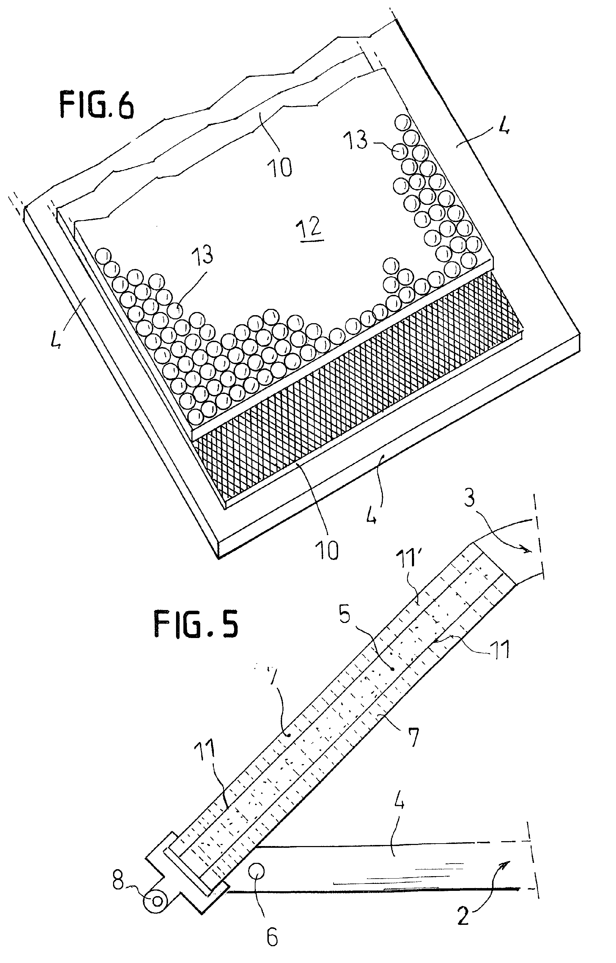

Le bandeau en tissu 10 est recouvert ( fig.6) d' une mince peau 12 de résine synthétique réflectorisante, sur laquelle sont enchâssées des microbilles 13, sur une couche uniforme. Les microbilles sont juxtaposées entre elles selon un rangement linéaire et réparties sur un même niveau, autrement dit dans un même plan parallèle au tissu 10. Le rangement linéaire des microbilles confère une plus grande souplesse au bandeau rétroréfléchissant.
La longueur du bandeau rétroréfléchissant est positionnée sur la ceinture à partir de l'arrêtoir 6 vers le point de déroulement 3 placé en haut de l'habitacle. Le bandeau s' étend sur la ceinture sur une longueur suffisamment importante pour arriver à I' épaule d' un adulte de corpulence moyenne, quand la ceinture est en position verrouillée, sans se prolonger au-delà du point 3 de déroulement, pour ne pas atteindre les mécanismes d' enroulement ou de blocage, qui sont logés généralement dans l' habillage14 de la carrosserie du véhicule. La partie rétroréfléchissante 5 du bandeau est positionnée sur l'axe médian de la ceinture et les parties fluorescentes 7 sont placées sur les deux côtés, de part et d' autre de la partie rétroréfléchissante, de manière à distinguer la ceinture de nuit comme de jour .

La figure 3 montre une variante de composition des parties rétroréfléchissantes 15 et des parties fluorescentes 16 sur le bandeau de la ceinture 4, en ce que les parties 15 et 16 ci-avant ont une forme carrée et sont réparties entre elles, en quinconce, sous la forme d' un damier, sur toute la largeur de la ceinture et sur une longueur comme définie au paragraphe précédent.

La figure 4 montre une autre variante de composition des parties rétro-réfléchissantes 17 et des parties fluorescentes 18, en ce qu' elles ont la forme de chevrons qui sont positionnés dans le sens de la largeur et en alternance sur la longueur de la ceinture de sécurité, à partir de l' arrêtoir comme défini ci-avant, de manière que les deux parties paraissent simultanément sur un même axe transversal.

L'invention est plus particulièrement destinée pour les ceintures de sécurité des sièges de véhicules, mais peut également être appliquée pour les sièges des grandes attractions foraines, telles que la grande roue ou autres .

## Revendications

1. Ceinture de sécurité pour sièges de véhicules, comprenant une ceinture (4) proprement dite ayant un premier point (2) d'attache immobile et fixé en partie inférieure de I' habitacle, un deuxième point (3) positionné en partie haute par lequel se range ou se déroule ladite ceinture (4) pour se verrouiller, par le truchement d'une boucle (8) sur un troisième point (9) fixe, laquelle ceinture (4) comporte sur une partie de sa longueur, un bandeau en tissu (10) fixé au moyen de coutures (11) et (11'), **caractérisée en ce que** les parties de matériau rétroréfléchissant (5) et les parties de matériau fluorescent (7), recouvrant le bandeau, sont réparties et juxtaposées sur ledit bandeau (10) dans le sens de la longueur et de la largeur, de manière à être perçues simultanément sur un même axe transversal et à un quelconque niveau du torse ou de I' épaule, de I' extérieur du véhicule,

2. Ceinture de sécurité, selon la revendication 1, **caractérisée en ce que** la base du bandeau est enduite d' une colle fusible à chaud, qui adhère à la sangle lors de l' assemblage .

3. Ceinture de sécurité, selon la revendication 1, **caractérisée en ce qu'** un mince élément de transfert thermocollant, constitué d' un matériau rétroréfléchissant et en partie d' un matériau fluorescent, est couché directement, par la base, sur une face de la sangle de la ceinture.

4. Ceinture de sécurité, selon les revendications 1,2 et 3, **caractérisée en ce que** le bandeau en tissu (10) et le mince élément de transfert s' étendent sur une longueur suffisante pour arriver à I' épaule d'un adulte, sans se prolonger au-delà, quand la ceinture est en position verrouillée.

5. Ceinture de sécurité, selon les revendications 1 et 2, **caractérisée en ce que** la partie rétroréfléchissante (5) est positionnée sur l' axe médian et les parties fluorescentes (7) sont placées sur les côtés, de part et d' autre de la partie rétroréfléchissante.

6. Ceinture de sécurité selon les revendications 1 et 2, **caractérisée en ce que** les parties rétroréfléchissantes (15) et les parties fluorescentes (16) de forme carrée, sont réparties entre-elles en quinconce.

7. Ceinture de sécurité selon l' une des revendications 1 et 3, **caractérisée en ce que** les parties rétroréfléchissantes et les parties fluorescentes (18) sont positionnées dans le sens de la largeur et en alternance dans le sens de la longueur .

8. Ceinture de sécurité selon les revendications 1,2 et 3, **caractérisée en ce que** la colle du bandeau thermocollant est réactivée à une température oscillant entre 140° et 170 °, pendant une durée située entre 20 et 40 secondes .
